# NEW EUROPEAN PATENT SPECIFICATION

(11) **EP 2 072 455 B2**
(45) Date of publication and mention of the opposition decision: **19.08.2020**
(45) Mention of the grant of the patent: 05.10.2011
(21) Application number: 07123987.5
(22) Date of filing: 21.12.2007
(51) Int. Cl.: B66F 9/075, B62B 3/06, H02J 7/00

(54) **Industrial truck**
Flurförderzeug
Véhicule industriel

(43) Date of publication of application: 24.06.2009
(73) Proprietor: BT Products AB, 595 81 Mjölby (SE)
(72) Inventor: Tallberg, Roger, 590 19 Mantorp (SE); Lennartsson, Sven-Inge, 590 19 Mantorp (SE)
(74) Representative: Zacco Sweden AB

(56) References cited:
- EP-A- 1 734 633
- EP-A1- 1 734 633
- EP-A1- 2 072 455
- EP-B1- 1 053 972
- DE-A1- 10 330 817
- DE-A1- 10 330 817
- DE-A1- 19 756 744
- DE-A1- 19 756 744
- DE-C2- 3 151 287
- US-A1- 2004 100 225
- US-A1- 2004 100 225
- Auszug aus "Transport und Logistik"
- Betriebsanleitung Fa. Linde

## Description

### TECHNICAL FIELD

The present invention pertains to an industrial truck, a method for immobilising an industrial truck during charging, and a method for providing an industrial truck onboard battery charger with information.

### BACKGROUND ART

Electrically driven industrial trucks, such as fork lifts, are traditionally provided with a battery, whereby operation without mains connection is enabled. The battery of such industrial trucks must be charged after certain amount of operation.

The truck batteries can be charged by means of external or internal battery chargers. If an internal battery charger, or, a so-called onboard battery charger, is mounted in the industrial truck, the industrial truck, upon charging, is simply connected to mains.

US 2004/0100225 discloses a battery operated lift truck. The battery is charged by an external battery charger connected to a truck computer and a CAN network.

During charging of the industrial truck, it must be ensured that the industrial truck cannot be operated. In the charging condition the truck is connected to mains, usually by means of a power cord. Now, the industrial truck must somehow be blocked, so that it is not possible for an operator to unintentionally drive the connected truck away, and thereby damage e.g. the cord and/or the truck. In known appliances, this problem has e.g. been solved by means of a mechanical immobilising device, which is activated when a power cord plug is removed from its designated holder situated on the industrial truck. As the operator removes the power cord plug from the truck in order to connect the power cord to mains, the immobilising device is activated whereby the industrial truck is blocked and cannot be operated. After charging, the operator returns the power cord plug to its holder on the truck, and the immobilising device is deactivated.

Several problems are associated with prior art mechanical immobilising devices. They require a certain space and comprise moving parts. They are subject to wear and mechanical influences. The designated holder for the power cord plug cannot be universally designed, since power cord plug dimensions and appearance differ throughout the world. Further, such mechanical immobilising devices are associated with relatively high costs and may lead to quality issues.

In industrial trucks, different kinds of batteries can be put to use, e.g. lead-acid batteries comprising flooded, gelled or absorbed glass mat electrolyte. Also, different batteries with respect to capacity can be used. Battery capacity requirements vary with field of application. Depending on battery type and battery capacity, different charging curves, i.e. charging voltage versus time, are desired on charging.

In order to be able to apply an appropriate charging curve, the battery charger must be provided with information regarding battery kind and battery capacity. Previously, onboard chargers have been provided with this information upon installation of the battery in the truck. Hereby, the mechanic or the operator had to manually set a mechanical battery switch on the charger in a position indicating battery kind and capacity. In order to prevent unjustified switching, the known battery switch was operated by means of a separate tool.

An onboard battery charger can also be provided with information regarding battery kind and battery capacity by means of an external programming device. Such a device can be connected to the battery charger and provide the charger with the relevant information.

Due to recent ambitions to provide industrial trucks of more compact design, the available installation space for the onboard charger is reduced. Hence, there is less room for a battery switch. Further, in an industrial truck of compact design, such a switch can be troublesome to reach for the mechanic/operator due to lack of clearance around the switch. Another drawback of a battery charger with a mechanical battery switch is the limitation to a specific number of preset battery choices. A mechanical switch has a fixed number of positions. If, after manufacture of the industrial truck, a new kind of battery is to be mounted into the truck, the battery charger must be manually adjusted or even exchanged for an adequate charging curve to be applied to the new battery kind.

If an external programming device is used instead of the battery switch, the battery charger must be furnished with an accessible connection for such programming device. This may complicate the truck design, especially in a compact truck. If such connection is to be protected from dirt and/or mechanical influences, an openable cover may be needed. This results in higher manufacturing costs. Further, such an onboard charger cannot be provided with information without the specific external programming device.

### SUMMARY OF THE INVENTION

The object of the present invention is to rationalize industrial truck battery charging, installation and exchange. A further object is to facilitate more compact industrial truck design.

These objects have been obtained by an industrial truck according to claim 1 comprising a battery, an onboard battery charger, a truck computer and a CAN network to which the truck computer is connected, wherein the battery charger is also connected to the CAN network. In this way, the truck computer and the battery charger can exchange information via the CAN network.

When the battery charger and the truck computer are able to communicate on the CAN network, the battery charger can hinder the truck computer from allowing truck operation during charging. Further, the truck computer can inform the battery charger of battery type and capacity, so that the battery charger is able to charge the battery in an appropriate manner. The present solution is reliable, universal and cost-effective.

In order to detect charging, i.e. a voltage supplied to the battery charger of the industrial truck, the battery charger comprises a charge detecting means. Said charge detecting means is adapted to send an immobilising signal to the truck computer, whereby the truck computer can inhibit operation. In accordance with a simple design, the charge detecting means can be adapted to detect a voltage on a power supply, such as a power cord.

The battery charger can be furnished with a logic unit which controls the battery charger and a CAN receiver/transmitter. Both the CAN receiver/transmitter and the charge detecting means are adapted to communicate with the logic unit. In this manner, the logic unit of the battery charger can retrieve information from the charge detecting means and communicate with the truck computer.

The battery charger is capable of charging truck batteries of different kinds and of different capacities. By means of the CAN receiver/transmitter of the battery charger, the battery charger receives information regarding battery kind and battery capacity from the truck computer via the CAN network. The CAN network enables communication over two lines or cables.

By furnishing the battery charger with a logic unit that can store and execute a variety of charging curves, the battery charger is flexible and adapted to charge batteries of different kinds and of different capacities.

The industrial truck comprises an input unit by means of which the truck computer can be provided with information regarding battery kind and battery capacity.

The objects the invention have also been accomplished by means of a method according to claim 5 for immobilising an industrial truck during charging. Said industrial truck comprises a truck battery, a battery charger, a truck computer and a CAN network to which the truck computer is connected. According to the present method, the battery charger, if a battery charging process is in progress, sends an immobilising signal to the truck computer via the CAN network. Thereby, the industrial truck cannot be operated during charging.

Finally, the objects have been accomplished by means of a method according to claim 6 for providing an industrial truck onboard battery charger with information. Herein, said industrial truck comprises a truck battery, a battery charger, a truck computer and a CAN network, to which the truck computer is connected, and the truck computer provides the battery charger with information regarding the truck battery via the CAN network. The truck computer can provide the battery charger with information regarding battery kind and battery capacity, whereby the battery charger can apply an appropriate charging curve.

### BRIEF DESCRIPTION OF THE FIGURES

- Figure 1: schematically discloses an industrial truck furnished with an on- board charger, a battery, a truck computer, a motor controller unit and a CAN network, and
- Figure 2: illustrates a diagram of connection of the onboard charger.

### DETAILED DESCRIPTION OF AN EXEMPLARY EMBODIMENT

Below, an embodiment of the present invention is described with reference to the enclosed figures. The suggested embodiment is supplied merely in order to facilitate the understanding of the invention, and is not intended to limit the scope of the enclosed patent claims in any way.

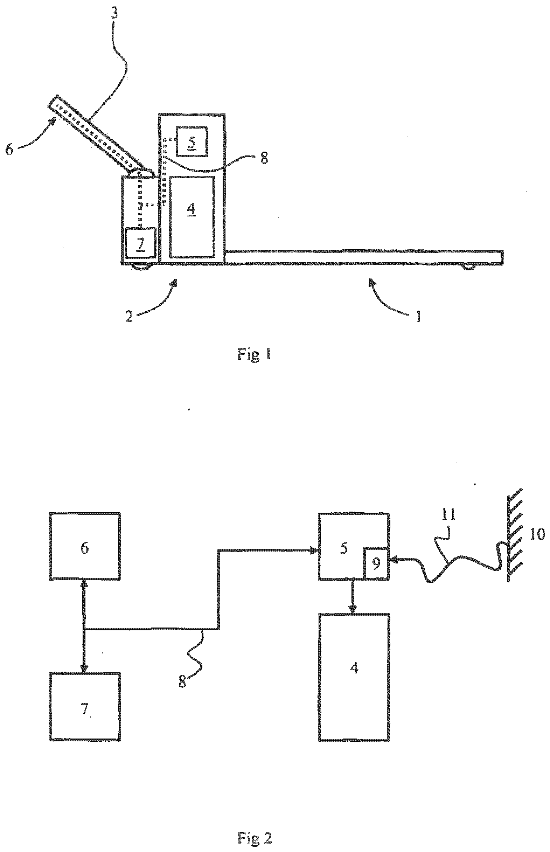

Figure 1 schematically illustrates a so-called tiller or powered pallet truck, and figure 2 illustrates a diagram of connection of the components of the truck. The industrial truck comprises two load engaging lift forks 1, projecting from a truck body 2. A tiller arm 3, by means of which the truck is controlled, is pivotally connected to the truck body 2.

The industrial truck is powered by a rechargeable battery 4, which is arranged in the truck body 2. The battery 4 can be charged by means of an onboard battery charger 5.

Further, the industrial truck is furnished with a truck computer 6. Said computer 6 can e.g. be positioned in a control handle (not shown), at the distal end of the tiller arm 3, and is provided with an input unit. The input unit comprises a display and/or control buttons, by means of which the user can control and monitor certain truck functions, such as speed, lifting, battery status and so on. The input unit of the truck computer 6 can also be used for setting operation variables, such as maximum allowable speed, maximum allowable acceleration, battery type and battery capacity. Alternatively, the operation variables are set by an external programming device, which can be connected to the truck computer 6.

A motor control device 7 can be arranged in the industrial truck, e.g. in the truck body 2. The motor control device 7 distributes power to various truck components, such as a truck motor (not shown) propelling the industrial truck and a pump motor (not shown) driving the lift forks 1.

As schematically illustrated in figure 1, the industrial truck also comprises a CAN network 8. The truck computer 6 and the battery charger 5 are connected to the CAN network 8. Thus, the truck computer 6 and the battery charger 5 can exchange information via the CAN network 8. When a motor control device 7 is arranged in the industrial truck, this device 7 is also connected to the CAN network 8. All components that are connected to the CAN network are provided with CAN receiver/transmitters enabling them to communicate on the CAN network 8. The motor control device 7 receives control instructions from the truck computer 6 over the can network 8.

The battery charger 5 can be furnished with an immobilising function, which when activated, sends an immobilising signal to the truck computer 6. More in detail, the battery charger 5 is provided with a charge detecting means 9, which detects whether the battery charger 5 is connected to a power supply 10. In figure 2 is illustrated how the battery charger 5 is connected to a power supply 10 by a power cord 11. The battery charger 5 can also be provided with a logic unit (not shown). In the charging condition, i.e. when the battery charger 5 is connected to mains 10 and the truck battery 4 is being charged, the charge detecting means 9 detects a voltage from the power cord 11 and sends a charge signal to the logic unit of the battery charger 5. When the logic unit of the battery charger 5 receives the charge signal, the logic unit initiates charging and sends an immobilising signal to the truck computer 6 over the CAN network 8. Now, the truck computer 6 ensures that the industrial truck cannot be operated, e.g. by not implementing input unit control orders, and/or by preventing power to reach the truck motor by instructing the motor control unit 7, via the CAN network 8, that the industrial truck is not to be operated. In the operational condition of the industrial truck, i.e. when the battery charger 5 is not connected to mains 10, the charge detecting means 9 is inactivated and no immobilising signal is sent to the truck computer 6.

Thus, by means of the CAN network 8, information can be transferred from the battery charger 5 to the truck computer 6. However, information can also be transferred in the opposite direction; from the truck computer 6 to the battery charger 5. In this way, information stored in the truck computer 6 regarding battery type and battery capacity can be transferred to the battery charger 5.

In the logic unit of the battery charger 5, a number of charging curves can be stored. When the battery charger 5 is furnished with the battery information, an appropriate charging curve, i.e. charging voltage to apply versus charging time, can be used by the battery charger 5 upon charging of the battery 4. An appropriate charging curve shortens charging time, improves battery performance and extends battery life.

In order to provide an industrial truck that is flexible with regards to battery kind and battery capacity, the logic unit of the battery charger 5 can be supplied with charging curves for all batteries that are suitable for the particular industrial truck. A battery suitable for an industrial truck is a battery of adequate capacity and outer dimensions. Now, when a battery 4 is mounted and the battery charger is informed of the type and capacity if the battery 4 via the CAN network 8, the battery charger 5 is able to execute an appropriate charging curve. If the industrial truck is furnished with a battery that requires a charging curve not stored in the logic unit of the battery charger 5, an external programming device can be connected to the truck computer 6 and/or the CAN network 8 in order to update the industrial truck. In this way, information about the new battery can be stored in the truck computer 6 and the battery charger 5. The truck computer 6 is updated with information regarding kind and capacity of the new battery, and the battery charger 5 is updated with the corresponding charging curve.

The combinations of battery kind and battery capacity that are stored in the truck computer 6, and the charging curves stored in the battery charger 5, are given specific identification tags. In this manner, the truck computer 6 can inform the battery charger 5 what charging curve to use by sending the relevant identification tag over the CAN network 8. Once the logic unit of the battery charger 5 has received the battery information, the battery charger 5 applies the charging curve in question the next time the battery charger 5 is connected to mains. The logic unit of the battery charger 5 stores the battery information, and applies the relevant charging curve in every subsequent charging process, until new and different battery information is received via the CAN network 8.

If an external programming device is used for setting the truck operation variables, such external programming device can be connected to the truck computer 6 and/or the CAN network 8.

Although here disclosed in connection with a tiller truck / a powered pallet truck, the present invention can be put to use in all kinds of industrial trucks which carry an onboard battery charger.

By means of an industrial truck battery charger 5 in accordance with the present invention, which charger 5, in analogy with a truck computer 6, is connected to a CAN network 8, an immobilising signal can be sent to the truck computer 6, whereby truck operation is prevented during charging. Further, upon installation of a truck battery 4 in an industrial truck, an operator can efficiently provide the onboard battery charger 5 with the relevant battery information via the CAN network 8. Thus, battery installation as well as battery exchange is simplified. The present invention also allows a more compact design of the industrial truck, since there is no need for a manual battery switch or a connection for an external programming device on the battery charger 5.

## Claims

1. Industrial truck comprising a battery (4), an onboard battery charger (5), a truck computer (6) and a CAN network (8) to which the truck computer (6) is connected, **characterised in that** the battery charger (5) is connected to the CAN network (8) wherein the battery charger (5) comprises a charge detecting means (9) for detecting a battery charging process, and, if such process is detected, is adapted to send an immobilising signal to the truck computer (6) and
wherein the battery charger (5) is capable of charging truck batteries of different kinds and of different capacities, whereby the battery charger (5) includes a CAN receiver/transmitter for receiving information regarding battery kind and battery capacity from the truck computer (6) via the CAN network (8),
and the Industrial truck comprises an input unit by means of which the truck computer (6) can be provided with information regarding battery kind and battery capacity.

2. Industrial truck according to claim 1, wherein the charge detecting means (9) is adapted to detect a voltage on a power supply (10, 11).

3. Industrial truck according to claims 1 or 2, wherein the battery charger (5) further comprises a logic unit and a CAN receiver/transmitter, and wherein said CAN receiver/transmitter and the charge detecting means (9) are adapted to communicate with the logic unit of the battery charger (5).

4. Industrial truck according to any one of clams 1-3, wherein the battery charger (5) comprises a logic unit for storing and executing charging curves, whereby the battery charger (5) is adapted to charge batteries of different kinds and of different capacities.

5. Method for immobilising an industrial truck according to any one of the claims 1-4 during charging, wherein the industrial truck comprises a truck battery (4), an onboard battery charger (5), a truck computer (6) and a CAN network (8) to which the truck computer (6) is connected, **characterised in that** the battery charger (5) comprises a charge detecting means (9) for detecting a battery charging process, and, if a battery charging process is in progress, sends an immobilising signal to the truck computer (6) via the CAN network (8).

6. Method for providing the onboard charger (5) of an industrial tuck according to any one of the claims 1-4 with information, wherein the industrial truck comprises a truck battery (4), a battery charger (5), a truck computer (6) and a CAN network (8) to which the truck computer (6) is connected, **characterised in that** the truck computer (6) provides the battery charger (5) with information regarding the truck battery (4) via the CAN network (8), that the battery charger (5) comprises a charge detecting means (9) for detecting a battery charging process and, if a battery charging process is in progress, sends an immobilising signal to the truck computer (6) via the CAN network (8).

7. Method according to claim 6, wherein the truck computer (6) provides the battery charger (5) with information regarding battery kind and battery capacity, whereby the battery charger (5) can apply an appropriate charging curve.

## Patentansprüche

1. Flurförderzeug mit einer Batterie (4), einer fahrzeugeigenen Batterieaufladeeinrichtung (5), einem Flurförderzeug-Computer (6) und einem CAN-Netz (8), mit dem der Flurförderzeug-Computer (6) verbunden ist, **dadurch gekennzeichnet, dass** die Batterieaufladeeinrichtung (5) mit dem CAN-Netz (8) verbunden ist, wobei die Batterieaufladeeinrichtung (5) ein Ladungserfassungsmittel (9) zum Erfassen eines Batterieladungsprozesses umfasst, und wenn ein solcher Prozess erfasst wird, zum Senden eines Immobilisierungssignals an den Flurförderzeug-Computer (6) ausgelegt ist und
wobei die Batterieaufladeeinrichtung (5) Flurförderzeugbatterien verschiedener Arten und verschiedener Kapazitäten aufladen kann, wobei die Batterieaufladeeinrichtung (5) eine CAN-Empfangs/Übertragungseinheit umfasst zum Empfangen von Informationen in Bezug auf Batterieart und Batteriekapazität von dem Flurförderzeug-Computer (6) über das CAN-Netz (8)
und das Flurförderzeug eine Eingabeeinheit umfasst, mittels der der Flurförderzeug-Computer (6) Informationen in Bezug auf Batterieart und Batteriekapazität bereitgestellt werden kann.

2. Flurförderzeug nach Anspruch 1, wobei das Ladungserfassungsmittel (9) ausgelegt ist zum Erfassen einer Spannung an einer Stromversorgungseinrichtung (10, 11) .

3. Flurförderzeug nach Anspruch 1 oder 2, wobei die Batterieaufladeeinrichtung (5) ferner eine Logikeinheit und eine CAN-Empfangs/Übertragungseinheit umfasst, und wobei die CAN-Empfangs/Übertragungseinheit und das Ladungserfassungsmittel (9) ausgelegt sind, mit der Logikeinheit der Batterieaufladeeinrichtung (5) zu kommunizieren.

4. Flurförderzeug nach einem der Ansprüche 1 bis 3, wobei die Batterieaufladeeinrichtung (5) eine Logikeinheit zum Speichern und Ausführen von Ladekurven umfasst, wobei die Batterieaufladeeinrichtung (5) zum Aufladen von Batterien verschiedener Arten und verschiedener Kapazitäten ausgelegt ist.

5. Verfahren zum Immobilisieren eines Flurförderzeuges nach irgendeinem der Ansprüche 1 bis 4 während des Aufladens, wobei das Flurförderzeug eine Flurförderzeug-Batterie (4), eine fahrzeugeigene Batterieaufladeeinrichtung (5), einen Flurförderzeug-Computer (6) und ein CAN-Netz (8) umfasst, mit dem der Flurförderzeug-Computer (6) verbunden ist, **dadurch gekennzeichnet, dass** die Batterieaufladeeinrichtung (5) ein Ladungserfassungsmittel (9) zum Erfassen eines Batterieladungsprozesses umfasst, und wenn ein Batterieladeprozess durchgeführt wird, ein Immobilisierungssignal an den Flurförderzeug-Computer (6) über das CAN-Netz (8) sendet.

6. Verfahren zum Bereitstellen von Informationen für die fahrzeugeigene Batterieaufladeeinrichtung (5) eines Flurförderzeuges nach irgendeinem der Ansprüche 1 bis 4,
wobei das Flurförderzeug eine Flurförderzeug-Batterie (4), eine Batterieaufladeeinrichtung (5), einen Flurförderzeug-Computer (6) und ein CAN-Netz (8) umfasst, mit dem der Flurförderzeug-Computer (6) verbunden ist, **dadurch gekennzeichnet, dass** der Flurförderzeug-Computer (6) über das CAN-Netz (8) Informationen für die Batterieaufladeeinrichtung (5) in Bezug auf die Flurförderzeug-Batterie (4) bereitstellt, dass die Batterieaufladeeinrichtung (5) ein Ladungserfassungsmittel (9) zum Erfassen eines Batterieladungsprozesses umfasst, und wenn ein Batterieladeprozess durchgeführt wird, ein Immobilisierungssignal an den Flurförderzeug-Computer (6) über das CAN-Netz (8) sendet.

7. Verfahren nach Anspruch 6, wobei der Flurförderzeug-Computer (6) Informationen in Bezug auf Batterieart und Batteriekapazität für die Batterieaufladeeinrichtung (5) bereitstellt, wodurch die Batterieaufladeeinrichtung (5) eine geeignete Ladekurve anwenden kann.

## Revendications

1. Chariot de manutention comprenant une batterie (4), un chargeur de batterie (5) embarqué, un ordinateur de chariot (6) et un réseau CAN (8) auquel l'ordinateur de chariot (6) est connecté, **caractérisé en ce que** le chargeur de batterie (5) est connecté au réseau CAN (8), dans lequel le chargeur de batterie (5) comprend un moyen de détection de charge (9) pour détecter un processus de charge de batterie, et, si tel processus est détecté, est apte à envoyer un signal d'immobilisation à l'ordinateur de chariot (6) ;
dans lequel le chargeur de batterie (5) est capable de charger des batteries de chariot de différents types et de différentes capacités, moyennant quoi le chargeur de batterie (5) comprend un récepteur/émetteur de réseau CAN pour recevoir des informations concernant le type de batterie et la capacité de batterie de l'ordinateur de chariot (6) par l'intermédiaire du réseau CAN (8) ; et
dans lequel le chariot de manutention comprend une unité d'entrée au moyen de laquelle l'ordinateur de chariot (6) peut recevoir des informations concernant le type de batterie et la capacité de batterie.

2. Chariot de manutention selon la revendication 1, dans lequel le moyen de détection de charge (9) est apte à détecter une tension sur une alimentation électrique (10, 11).

3. Chariot de manutention selon la revendication 1 ou 2, dans lequel le chargeur de batterie (5) comprend en outre une unité logique et un récepteur/émetteur de réseau CAN, et dans lequel ledit récepteur/émetteur de réseau CAN et le moyen de détection de charge (9) sont aptes à communiquer avec l'unité logique du chargeur de batterie (5).

4. Chariot de manutention selon l'une quelconque des revendications 1 à 3, dans lequel le chargeur de batterie (5) comprend une unité logique pour stocker et exécuter des courbes de charge, moyennant quoi le chargeur de batterie (5) est apte à charger des batteries de différents types et de différentes capacités.

5. Procédé pour immobiliser un chariot de manutention selon l'une quelconque des revendications 1 à 4 pendant la charge, dans lequel le chariot de manutention comprend une batterie de chariot (4), un chargeur de batterie (5) embarqué, un ordinateur de chariot (6) et un réseau CAN (8) auquel l'ordinateur de chariot (6) est connecté, **caractérisé en ce que** le chargeur de batterie (5) comprend un moyen de détection de charge (9) pour détecter un processus de charge de batterie, et, si un processus de charge de batterie est en cours, envoie un signal d'immobilisation à l'ordinateur de chariot (6) par l'intermédiaire du réseau CAN (8).

6. Procédé pour fournir des informations au chargeur de batterie (5) embarqué d'un chariot de manutention selon l'une quelconque des revendications 1 à 4, dans lequel le chariot de manutention comprend une batterie de chariot (4), un chargeur de batterie (5), un ordinateur de chariot (6) et un réseau CAN (8) auquel l'ordinateur de chariot (6) est connecté, **caractérisé en ce que** l'ordinateur de chariot (6) fournit au chargeur de batterie (5) des informations concernant la batterie de chariot (4) par l'intermédiaire du réseau CAN (8), **en ce que** le chargeur de batterie (5) comprend un moyen de détection de charge (9) pour détecter un processus de charge de batterie et, si un processus de charge de batterie est en cours, envoie un signal d'immobilisation à l'ordinateur de chariot (6) par l'intermédiaire du réseau CAN (8).

7. Procédé selon la revendication 6, dans lequel l'ordinateur de chariot (6) fournit au chargeur de batterie (5) des informations concernant le type de batterie et la capacité de batterie, moyennant quoi le chargeur de batterie (5) peut appliquer une courbe de charge appropriée.
